# FASCICULE DE BREVET EUROPEEN

(11) **EP 1 133 384 B1**
(45) Date de publication et mention de la délivrance du brevet: **12.03.2003**
(21) Numéro de dépôt: 99963434.8
(22) Date de dépôt: 25.11.1999
(51) Int. Cl.: B29B 13/06

(54) **PROCEDE ET INSTALLATION POUR LA FABRICATION D'UNE PREFORME, METTANT EN OEUVRE DES MOYENS DE SECHAGE PERFECTIONNES**
VERFAHREN UND VORRICHTUNG ZUR HERSTELLUNG EINES VORFORMLINGS DURCH BENUTZUNG VON TROCKNUNGSMITTELN
METHOD AND INSTALLATION FOR MAKING A PREFORM, USING IMPROVED DRYING MEANS

(30) Priorité: 25.11.1998 FR 9815002
(43) Date de publication de la demande: 19.09.2001
(73) Titulaire: Schmalbach-Lubeca AG, 40880 Ratingen (DE)
(72) Inventeur: HAESENDONCKX, Frank, B-8630 Veurne (BE)
(74) Mandataire: Matkowska, Franck
(86) Numéro de dépôt international: EP9909655
(87) Numéro de publication internationale: WO00030822

(56) Documents cités:
- EP-A- 0 379 684
- DE-A- 4 436 046
- DE-B- 1 454 847
- PATENT ABSTRACTS OF JAPAN vol. 014, no. 013 (M-918), 11 janvier 1990 (1990-01-11) & JP 01 258911 A (MITSUI PETROCHEM IND LTD), 16 octobre 1989 (1989-10-16)

## Description

La présente invention à pour objets un procédé de fabrication d'une préforme obtenue par injection dans un moule d'au moins une résine thermoplastique, à l'état substantiellement cristallin, ainsi qu'une installation pour la mise en oeuvre de ce procédé. L'invention réside plus précisément dans un perfectionnement qui est apporté à l'opération de séchage de la résine sous forme de granulés, laquelle opération de séchage est réalisée préalablement à l'injection de la résine dans le moule. L'invention trouve de manière préférentielle, mais non exclusive, son application à la fabrication de préformes et de récipients plastiques à base d'au moins une résine de polyéthylène téréphtalate (PET), qui présentent un taux d'acétaldéhyde (AA) faible, ce qui les rend préférentiellement, mais non exclusivement, adaptés au stockage de l'eau minérale.

Dans l'industrie de l'emballage, et plus particulièrement dans le domaine de l'embouteillage, il est à ce jour largement répandu d'utiliser des récipients plastiques, qui sont obtenus par étirage et soufflage d'une préforme dans un moule. De manière usuelle, la préforme est obtenue par injection dans un moule d'une ou plusieurs résines thermoplastiques. Les résines thermoplastiques les plus couramment utilisées à ce jour, du fait de leur faible prix de revient, sont les résines à base d'homo- ou de copolymères de polyéthylène téréphtalate (PET). Ces résines de PET présentent toutefois l'inconvénient majeur d'être perméables aux gaz, et en particulier à l'oxygène et au dioxyde de carbone. Lorsque l'on souhaite obtenir des récipients ayant des propriétés fonctionnelles spécifiques qui ne peuvent pas être obtenues avec les résines de PET, on utilise pour la fabrication de la préforme des résines thermoplastiques plus spécifiques ayant les propriétés recherchées. Par exemple, lorsque l'on souhaite réaliser un récipient plastique ayant des propriétés barrières aux gaz améliorées, il est connu d'utiliser des résines thermoplastiques spécifiques telles que des résines polyamides contenant des groupes m-xylylène et communément désignées résines "MX-nylon", des résines à base d'un copolymère d'éthylène et d'alcool vinylique, et par exemple des résines d'EVOH, ou encore des résines de polyéthylène2,6-naphtalène dicarboxylate (PEN), etc... Ces résines spécifiques peuvent être mises en oeuvre en étant mélangées, avant injection, avec une résine PET ou similaire, le mélange obtenu étant injecté de manière usuelle dans un moule pour la réalisation de la préforme. Plus couramment, ces résines spécifiques sont utilisées pour la fabrication de préformes ayant une structure multicouches, par co-injection séquentielle et/ou parallèle d'une résine spécifique et d'une résine de PET ou similaire.

De manière usuelle, la ou les résines thermoplastiques, qui sont utilisées pour fabriquer une préforme, présentent un taux de cristallisation supérieur à 50 % et se présentent initialement sous forme de granulés solides. Ces granulés de résine à l'état substantiellement cristallin sont obtenus de manière connue en faisant subir à des granulés de résine à l'état amorphe un traitement thermique lors de l'étape de fabrication des granulés. Les granulés de résine à l'état amorphe présentent l'inconvénient d'avoir tendance à coller et à former des agglomérats. Cette étape préalable de cristallinisation de ces granulés de résine qui est mise en oeuvre lors de l'étape de fabrication des granulés permet avantageusement d'obtenir des granulés de résine qui du fait de leur état cristallin n'ont plus tendance à s'agglomérer entre eux. Un exemple de procédé de cristallinisation de granulés de résine polyester est notamment décrit dans la demande de brevet européen EP-A-0 379 684. Dans cette publication, les granulés de résine polyester à l'état cristallin sont obtenus en faisant subir à des granulés de résine polyester à l'état amorphe un traitement thermique en deux étapes successives.

Pour fabriquer une préforme à partir d'une résine thermoplastique substantiellement à l'état cristallin et sous forme de granulés, on réalise les opérations successives suivantes :
- fusion et mélange des granulés de résine par passage dans une extrudeuse à vis,
- injection dans un moule de la résine fondue issue de l'extrudeuse.

En règle générale, l'étape précitée de fusion et de mélange des granulés de résine lors de la fabrication d'une préforme est précédée d'une étape de stockage de ces granulés de résine à l'état substantiellement cristallin, qui selon le cas peut être plus ou moins longue. Les résines thermoplastiques les plus couramment utilisées pour la fabrication de préformes, et en particulier les résines de PET, absorbent l'humidité de l'atmosphère lorsqu'elles sont stockées sous forme de granulés pendant un certain temps. Cette humidité présente dans la résine, à cause des températures importantes mises en jeu pour réaliser la fusion des granulés de résine et pour injecter la résine fondue dans le moule de la préforme, engendre une dégradation par hydrolyse de la résine. Cette dégradation par hydrolyse est d'autant plus importante que le taux d'humidité relative de la résine est important et/ou que les températures de chauffage de la résine sont élevées. Cette dégradation hydrolytique de la résine aboutit de manière préjudiciable à une réduction du poids de la molécule de la résine, diminuant ainsi la viscosité intrinsèque de la résine et les propriétés associées. Or on sait qu'une perte de viscosité intrinsèque trop importante peut être préjudiciable pour la qualité de la préforme obtenue, et en particulier peut nuire à la transparence de la préforme et peut entraîner une perte des propriétés mécaniques de la bouteille obtenue à partir de la préforme. Il est donc essentiel pour les fabricants de préformes, de réduire au mieux ce phénomène de dégradation par hydrolyse de la résine. Dans ce but, conformément au préambule de la revendication 1, on réalise, préalablement à la transformation de la résine par passage dans la vis d'extrusion, une opération préliminaire de séchage des granulés de résine à l'état cristallin, dans une installation de la revendication 1, ce qui permet de réduire le taux d'humidité relative des granulés de résine. A ce jour, cette opération de séchage est réalisée en faisant passer les granulés de résine dans une trémie de séchage, dont la sortie est raccordée à l'entrée de l'extrudeuse, et qui délimite une chambre intérieure de séchage portée à une température donnée, au moyen d'un flux d'air chaud sec continuellement renouvelé.

Au cours du procédé de fabrication d'une préforme, la ou les résines utilisées subissent également une dégradation thermique, qui se produit principalement lors du passage de la résine dans l'extrudeuse à vis. Cette dégradation thermique est préjudiciable car elle entraîne, d'une part une perte des propriétés physiques de la résine, se traduisant notamment par une perte de viscosité intrinsèque, l'apparition de traces de cristallinité sur la préforme ou encore une modification de la teinte des préforme, et d'autre part la formation de sous-produits indésirables. En particulier s'agissant d'une résine de PET, l'un des sous-produits indésirables résultant de la dégradation thermique de la résine est l'acétaldéhyde (CH₃CHO) qui est produit principalement sous forme gazeuse, et qui se caractérise par une odeur et un goût fruités. L'acétaldéhyde se retrouve en final dans les parois du récipient qui est réalisé à partir de la préforme, et migre, en cours de stockage, au contact du produit stocké dans le récipient Si le taux d'acétaldéhyde est trop élevé, on aboutit à une altération sensible du goût du produit stocké, altération du goût qui peut de manière préjudiciable être perceptible pour le consommateur. Dans le cas d'une résine PET, il est donc important d'obtenir une génération d'acétaldéhyde aussi faible que possible. Le maintien d'un taux d'acétaldéhyde très faible est primordial lorsque le produit stocké dans le récipient est un produit de faible saveur, tel que par exemple de l'eau minérale. Pour cette raison, dans le domaine particulier du stockage d'eau minérale, les embouteilleurs imposent, à leurs fournisseurs de bouteilles à base de PET, un taux maximum d'acétaldéhyde à ne pas dépasser.

Une des difficultés de l'opération de séchage des granulés de résine à l'état cristallin réside dans le choix de la température et de la durée de séchage dans la trémie. En effet pour éliminer efficacement l'eau absorbée par la résine, et faire chuter le taux d'humidité relative de la résine à des valeurs acceptables, la température et la durée de séchage doivent être suffisamment importantes. A l'inverse, la température et la durée de séchage doivent être suffisamment faibles, pour limiter au mieux au stade de l'opération de séchage les dégradations thermiques et hydrolytique de la résine. S'agissant par exemple de résines de PET, on sait aujourd'hui que l'hydrolyse de ces résines à l'état solide peut commencer à une température de 150°C, certes avec une vitesse faible, mais qui dépend de la température et augmente avec celle-ci. Pour cette raison, on préfère limiter à ce jour la température de séchage de la résine PET à des valeurs telles que la résine en sortie de la trémie de séchage présente une température inférieure à 150°C. En règle générale, l'air de séchage introduit dans la trémie est porté à une température de l'ordre de 140°C, ce qui correspond à une température résine de l'ordre de 135°C, et la durée de séchage de la résine PET est généralement comprise entre 6 et 8 heures.

L'invention propose un procédé de fabrication d'une préforme à partir d'au moins une résine thermoplastique, substantiellement à l'état cristallin, qui est conforme à la revendication 1, et dont l'étape de séchage à été perfectionnée. Dans le présent texte, on désigne par résine « substantiellement » à l'état cristallin une résine présentant un taux de cristallinité supérieur à 50%.

La séparation en au moins deux étapes distinctes de l'opération de séchage permet avantageusement de mieux optimiser le processus de séchage de la résine. En effet, au cours du processus de séchage de la résine, le risque de dégradation hydrolytique de la résine est maximum en début de séchage alors que le taux d'humidité relative de la résine est le plus élevé, et va en décroissant au fur et à mesure du processus de séchage, le taux d'humidité relative de la résine allant en diminuant. A l'inverse, le risque de dégradation thermique de la résine est plus faible, et voir inexistant en début de séchage, mais augmente au cours du processus de séchage du fait de la diminution du taux d'humidité relative de la résine. Grâce au procédé de l'invention, lors de la première étape de séchage, les risques de dégradation hydrolytique étant prépondérants, on choisit une température de séchage qui est suffisamment faible pour éviter, ou à tout le moins limiter la dégradation hydrolytique de la résine. A l'issue de la première étape, le taux d'humidité relative de la résine ayant baissé, il devient avantageusement possible de travailler avec une température de séchage plus élevée, sans risquer une dégradation hydrolytique importante de la résine. La durée de cette deuxième étape de l'opération de séchage doit toutefois être suffisamment faible pour éviter, ou à tout le moins limiter, la dégradation thermique de la résine, qui est prépondérante à ce stade du processus de séchage par rapport à la dégradation hydrolytique.

Grâce au procédé de l'invention, il devient avantageusement possible de travailler avec une température de séchage (température de la deuxième étape de séchage) qui est plus élevée que les températures de séchage mises en oeuvre à ce jour, et sans préjudice pour la dégradation thermique et hydrolytipue de la résine au cours de l'opération de séchage. Il en découle principalement que l'on peut obtenir en sortie de l'opération de séchage des granulés de résine séchés, dont la température est plus élevée qu'avec le procédé de l'art antérieur. Comparativement, avec le procédé de l'art antérieur, si l'on cherchait à appliquer une température de séchage plus élevée identique à la température de séchage mise en oeuvre au cours de la deuxième étape du procédé de l'invention, on provoquerait de manière préjudiciable au cours de l'opération de séchage une dégradation hydrolytique de la résine plus importante que dans le procédé de l'invention, et une dégradation thermique qui serait au moins comparable et selon toutes vraisemblances également plus importante que dans le procédé de l'invention.

Grâce à l'invention, en obtenant une température de résine plus élevée en sortie de l'opération de séchage, l'opération suivante de fusion et de malaxage de la résine nécessite une énergie thermique et mécanique, qui est avantageusement plus faible. Incidemment, il devient envisageable, sans dégrader le processus de fusion de la résine, de diminuer la température de chauffage de la résine, c'est-à-dire en pratique la température de l'extrudeuse à vis, ce qui permet de réduire la dégradation thermique de la résine lors de sa transformation, et par là-même permet de réduire la production de sous-produits de dégradation indésirables au cours du procédé de fabrication de la préforme. Il revient à l'homme du métier de fixer les paramètres (t1, T1, t2,T2) du procédé de l'invention, au cas par cas, en fonction de l'installation utilisée pour la fabrication des préformes et du type de résine thermoplastique utilisée.

L'invention a également pour objets un procédé de fabrication d'un récipient plastique obtenu par étirage et soufflage dans un moule d'une préforme fabriquée selon le procédé précité, ainsi qu'une installation pour la mise en oeuvre de ce procédé.

L'installation de l'invention comporte de manière usuelle, des moyens de séchage de la résine thermoplastique sous forme de granulés, et à l'état substantiellement cristallin, dont la sortie est raccordée à l'entrée d'une extrudeuse, laquelle extrudeuse alimente en sortie un moule d'injection.

De manière caractéristique selon l'invention, les moyens de séchage comportent :
- au moins deux trémies de séchage successives, à savoir une première trémie de séchage prévue pour traiter un volume de résine (V1) et une deuxième trémie de séchage prévue pour traiter un volume de résine (V2) qui est strictement inférieur au volume de traitement (V1) de la première trémie,
- des moyens permettant d'alimenter la première trémie de séchage avec la résine thermoplastique sous forme de granulés,
- des moyens permettant d'acheminer les granulés de résine issus de la première trémie jusqu'à l'entrée de la seconde trémie,
- des moyens permettant de faire circuler un gaz de séchage à l'intérieur de la première trémie de séchage, et un gaz de séchage à l'intérieur de la deuxième trémie de séchage,
- des premiers moyens de chauffage conçus pour porter le gaz de séchage, introduit dans la première trémie, à une température de séchage (T1), et
- des deuxièmes moyens de chauffage conçus pour porter le gaz de séchage introduit dans la deuxième trémie, à une température de séchage (T2) strictement supérieure à la température de séchage (T1) des premiers moyens de chauffage.

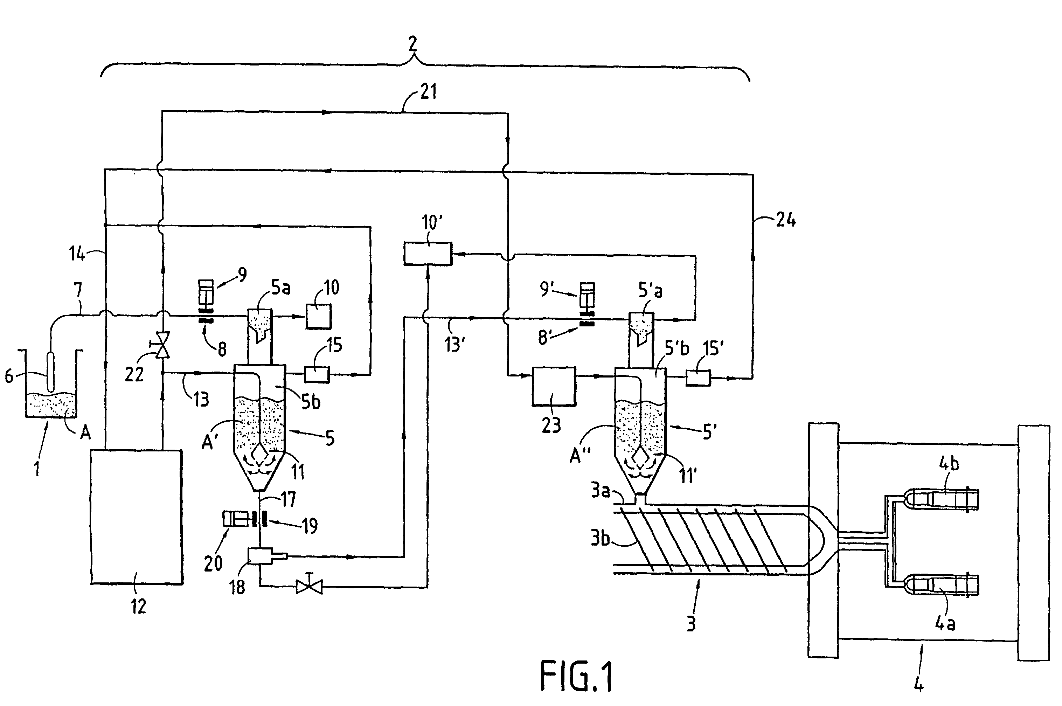

D'autres caractéristiques et avantages de l'invention apparaîtront plus clairement à la lecture de la description suivante de la structure et du fonctionnement d'une installation de l'invention, laquelle description est donnée en référence au dessin annexé sur lequel la figure 1 est un synoptique d'une variante particulière de réalisation d'une installation conforme à l'invention.

L'installation de la figure 1 permet la fabrication de préformes par injection dans un moule d'une résine thermoplastique à l'état substantiellement cristallin, telle que par exemple une résine PET. La résine thermoplastique utilisée est initialement stockée dans un silo 1 sous forme de granulés solides A. L'installation met en oeuvre des moyens de séchage 2 des granulés de résine A, une extrudeuse à vis 3 qui a pour fonction de faire fondre les granulés de résine séchés issus des moyens de séchage 2, et d'acheminer la résine fondue à l'entrée d'un moule d'injection 4. La structure et le fonctionnement de l'extrudeuse à vis 3 et du moule d'injection 4 sont parfaitement connus, et ne seront donc pas détaillés dans la présente description ; seuls les moyens de séchage 2 qui sont caractéristiques de l'invention seront décrits en détails ci-après. Il convient toutefois de souligner que dans l'exemple particulier illustré, le moule d'injection 4 comporte deux cavités d'injection 4a et 4b, et permet de manière usuelle à chaque cycle d'injection la fabrication en parallèle de deux préformes. Le nombre de cavités d'injection n'est bien évidemment pas limitatif de l'invention, et peut être quelconque. Généralement, pour des raisons de productivité, un moule d'injection comportera un nombre beaucoup plus important de cavités en parallèle.

Selon une caractéristique essentielle de l'invention, les moyens de séchage 2 de l'installation mettent en oeuvre deux trémies de séchage successives : une trémie principale 5 et une trémie secondaire 5'.

La trémie de séchage principale 5, et les moyens associés permettant son fonctionnement sont usuels. Cette trémie principale 5 comporte une chambre supérieure 5a qui est prévue pour être alimentée avec les granulés de résine A issus du silo 1, et une chambre inférieure 5b de plus grand volume, pour le séchage des granulés de résine. Une buse d'aspiration 6 montée à l'intérieur du silo 1 est raccordée par un conduit 7 à l'entrée de la chambre supérieure 5a de la trémie 5. Le conduit 7 est équipé d'un organe de fermeture/ouverture 8 qui est actionnable par un vérin pneumatique 9, ce qui permet de contrôler l'alimentation de la trémie 5 en granulés de résine A, en commandant l'ouverture ou la fermeture du conduit d'alimentation 7. Une pompe à vide 10 est raccordée à la chambre supérieure 5a. Lorsque la pompe à vide 10 fonctionne et lorsque le conduit 7 n'est pas fermé, des grains de résine A du silo 1 sont aspirés dans le conduit 7 et transportés jusqu'à l'intérieur de la chambre supérieur 5a, puis tombe dans la chambre de séchage 5b, où ils s'accumulent. Dans la chambre de séchage 5b est en outre monté un capteur de niveau (non représenté), qui permet de détecter le niveau de résine dans la chambre de séchage. Au démarrage de l'installation, le conduit 7 est ouvert et on met en fonctionnement la pompe à vide 10, en sorte de remplir la chambre de séchage 5b jusqu'à ce que le niveau de résine détecté dans la chambre de séchage 5b atteigne un seuil minimum de consigne prédéterminé. Une fois ce seuil atteint, le conduit 7 est automatiquement fermé, ce qui arrête l'alimentation des grains de résine. Ultérieurement, en cours de procédé, lorsque le niveau de résine détecté devient de nouveau inférieur à ce seuil, le conduit 7 est de nouveau ouvert automatiquement, en sorte d'alimenter la trémie 5 en grains de résine, pendant un laps de temps donné, qui est réglable par exemple au moyen d'une temporisation. Une fois ce laps de temps écoulé, le conduit 7 est automatiquement fermé, ce qui interrompt l'alimentation des grains de résine, jusqu'à ce que le niveau de résine détecté redevienne inférieur au seuil minium de consigne. On maintient ainsi automatiquement en cours de procédé un volume (V1) de grains de résine A' à l'intérieur de la chambre de séchage 5b qui est sensiblement constant et prédéterminé.

Pour le séchage des grains de résine A' contenu dans la chambre de séchage 5b, la trémie 5 est équipée de moyens qui permettent de faire continuellement circuler un air chaud sec renouvelé à l'intérieur de la chambre de séchage. Ces moyens sont connus et vont par conséquent à présent être décrits très succinctement. Ces moyens comportent une buse de soufflage 11 qui est montée à l'intérieur de la chambre de séchage 5b, et qui est raccordée à une unité de séchage 12 par l'intermédiaire d'un conduit 13 isolé thermiquement. La chambre de séchage 5b de la trémie 5 est en outre raccordée à l'unité de séchage 12, par l'intermédiaire d'un conduit 14 équipé de moyens de filtration 15. L'unité de séchage constitue un ensemble connu qui d'une part permet de souffler continuellement dans le conduit 13, à destination de la buse 11, un air chaud sec porté à une température prédéterminée et réglable, et qui d'autre part permet de reprendre par aspiration, via le conduit 14, l'air à l'intérieur de la chambre de séchage 5b qui s'est chargé en humidité au contact des grains de résine A'. Cet air chaud humide est régénéré par l'unité de séchage 12, par passage notamment dans une cartouche desséchante (non représentée), avant d'être de nouveau souffler à destination de la chambre de séchage 5b de la trémie 5.

De manière similaire à la trémie de séchage principale 5, la trémie de séchage secondaire 5' comporte une chambre supérieure 5'a et une chambre inférieure de séchage 5'b. La chambre supérieure 5'a est raccordée, pour son alimentation en granulés de résine, à la sortie de la chambre de séchage 5b de la trémie principale 5, au moyen d'une conduite de transport 13' isolée thermiquement. Plus précisément la sortie de la chambre de séchage 5b de la trémie principale 5 est raccordée par un conduit 17 à l'entrée d'une boîte d'aspiration 18, dont la sortie est raccordée à la conduite de transporte 13'. Le conduit 17 est équipé d'un organe de fermeture ouverture 19 qui est actionnable par un vérin pneumatique 20. De manière similaire à la trémie de séchage principale 5, la trémie de séchage secondaire 5' est également équipée d'une pompe à vide 10', d'un organe de fermeturelouverture 8' actionnable par un vérin pneumatique 9', et monté sur la conduite de transport 13', et d'une buse 11' pour le soufflage d'un air de séchage sec et chaud à l'intérieur de la chambre de séchage 5'b. La pompe à vide 10' est raccordée non seulement à la chambre supérieure 5'a de la trémie 5', mais également à la boîte d'aspiration 18.

La trémie secondaire 5 est également équipée d'un capteur (non représenté) qui permet de détecter le niveau de résine contenu à l'intérieur de la chambre de séchage 5'b. Lorsque le niveau de résine détecté à l'intérieur de la chambre de séchage 5'b est inférieur à un seuil minimum prédéterminé, les organes 19 et 8' sont actionnés automatiquement en position d'ouverture ; la boîte d'aspiration qui est mise en dépression par la pompe à vide 10' permet d'aspirer des granulés de résine A' située au niveau de la partie inférieure de la chambre de séchage 5a de la trémie principale 5, et d'introduire ces granulés dans la conduite de transport 13'. La conduite de transport étant également mise en dépression par la pompe à vide 10', ces granulés de résine sont acheminés jusqu'à la chambre supérieure 5'a de la trémie secondaire 5, et tombent dans la chambre de séchage 5'b. Au bout d'un laps de temps prédéterminé et réglable par exemple au moyen d'une temporisation, les organes 19 et 8' sont automatiquement actionnés en position de fermeture, ce qui isole la trémie secondaire 5' de la trémie 5, l'alimentation de la trémie secondaire en granulés de résine étant interrompue jusqu'à ce que le niveau de résine détecté dans la chambre de séchage 5'b redevienne inférieur ou égal au seuil minimum de consigne. On maintient ainsi automatiquement en cours de procédé un volume (V2) de grains de résiné A" à l'intérieur de la chambre de séchage 5'b qui est sensiblement constant et prédéterminé.

Pour son alimentation en air de séchage chaud et sec, la buse de soufflage 11' de la trémie secondaire 5' est raccordée à l'unité de séchage 12, au moyen d'un conduit 21 isolé thermiquement et équipé d'une vanne de fermeture 22. Ainsi, lorsque la vanne 22 est ouverte, une partie de l'air chaud et sec qui est soufflé par l'unité de séchage 12 est dirigé à destination de la trémie principale 5, tandis que l'autre partie de cet air de séchage est dirigé à destination de la trémie de séchage secondaire 5'. Egalement, avant son introduction dans la chambre de séchage 5'b de la trémie secondaire 5', l'air de séchage chaud et sec fourni par l'unité de séchage 12 subit un chauffage supplémentaire en traversant une enceinte de chauffage 23, prévue immédiatement en amont de la trémie de séchage secondaire 5'. Les moyens de chauffage de l'enceinte de chauffage 23 sont réglés de telle sorte que l'air qui est soufflé par la buse 11' à l'intérieur de la trémie secondaire 5' est portée à une température de séchage (T2) qui est strictement supérieure à la température de séchage (T1) de l'air soufflé par la buse 11 à l'intérieur de la trémie principale 5. Pour permettre la reprise à l'intérieur de la chambre de séchage 5'b de l'air chaud qui s'est chargé en humidité au contact des grains de résine A", la chambre de séchage 5'b est raccordé à l'unité de séchage 12 au moyen d'un conduit 24.

Dans l'exemple illustré sur la figure 1, la trémie secondaire 5' est montée directement sur l'extrudeuse 3, la sortie de la chambre de séchage 5'b étant raccordée avec l'intérieur de l'enceinte chauffante 3a qui sert de logement à la vis d'extrusion rotative 3b. On limite ainsi avantageusement au minimum les risques de déperdition thermique pour les granulés de résine A" lors de leur transfert entre la trémie secondaire 5' et l'extrudeuse 3. Une telle construction n'est toutefois envisageable qu'avec une trémie de séchage secondaire de faible volume, c'est-à-dire lorsque que la quantité de résine nécessaire à chaque cycle d'injection est faible ou en d'autres termes lorsque le nombre de cavités du moule d'injection est faible. Dans une autre variante de réalisation de l'invention, et en particulier lorsque le volume de la trémie de séchage 5' est important, il est envisageable que cette trémie secondaire 5' soit positionnée au-dessus de l'extrudeuse 3 et raccordée à celle-ci par un conduit flexible, qui est isolée thermiquement et dont la longueur est de préférence réduite au minimum.

L'installation qui vient d'être décrite en référence à la figure 1 permet de fabriquer des préformes à partir des granulés A d'une résine thermoplastique stockés dans le silo 1, selon un procédé dont les principales étapes sont les suivantes. Dans une première étape les granulés A de résine, qui au cours de leur stockage ont absorbé l'humidité de l'air environnant, sont séchés lors de leur passage dans la trémie de séchage principale 5. Cette première étape de séchage est réalisée à une température de séchage (T1) prédéterminée (température de l'air de séchage issu de la buse 11) et pendant une durée (t1). La durée de séchage (t1) dans la trémie principale 5 est fonction du volume (V1) de résine traité dans la trémie 5 et de la cadence de production, c'est-à-dire de la quantité de résine fondue par unité de temps qui est introduite dans le moule d'injection 4 par la vis de l'extrudeuse 3. Cette quantité de résine par unité de temps est fonction notamment du temps de cycle d'injection, du poids de chaque préforme, et du nombre de cavités du moule, c'est-à-dire du nombre de préformes fabriquées à chaque cycle d'injection. Dans une seconde étape de séchage, les granulés A' de résine issus de la première étape de séchage subissent un séchage complémentaire par passage dans la trémie de séchage secondaire 5'. Cette seconde étape de séchage est réalisée à une température de séchage (T2) prédéterminée (température de l'air de séchage issu de la buse 11') qui est strictement supérieure à la température de séchage (T1) de la première étape de séchage, et pendant une durée de séchage (t2) qui est strictement inférieure à la durée de séchage (t1) de la première étape de séchage. La durée de séchage (t2) dans la trémie secondaire 5' est fonction du volume (V2) de résine traité dans la trémie 5' et de la cadence de production de l'installation. Dans une troisième étape, les granulés A" de résine qui sont issus de la trémie secondaire 5' sont malaxés et fondus par passage dans l'extrudeuse 3, l'enceinte chauffante 3a de l'extrudeuse 3 étant de manière usuelle équipée de colliers chauffants (non représentés) qui permettent de porter les granulés de résine à une température supérieure à leur température de fusion ; la vis d'extrusion 3b permet de mélanger et de faire progresser ces granulés de résine à destination du moule d'injection 4. La quatrième et dernière étape est constituée de manière usuelle par l'injection de la résine fondue dans les cavités 4a et 4b, et dans le démoulage des préformes après ouverture du moule.

Les préformes obtenus sont ensuite utilisées pour fabriquer de manière usuelle des récipients, en étant chauffées, puis étirés mécaniquement et soufflées dans un moule de soufflage. Ce procédé de fabrication étant connu, il ne sera pas décrit dans la présente description.

Le principal avantage de l'invention est qu'elle permet, grâce à la séparation de l'opération de séchage de la résine en deux étapes distinctes, de mieux optimiser le séchage de la résine, et par là-même d'obtenir une température de résine en sortie de séchage plus élevée, tout en maintenant la dégradation thermique et hydrolytique de la résine en cours de séchage à un niveau faible. Une température de résine plus élevée en sortie de séchage implique une température de résine en début d'extrusion plus élevée. Il en résulte que la fusion de la résine lors de son passage dans l'extrudeuse nécessite moins d'énergie pour la transformation de la résine. II est ainsi possible de diminuer la température de chauffage de la résine en cours d'extrusion, et par là-même de réduire la dégradation thermique de la résine en cours d'extrusion, ce qui se traduit notamment par une génération plus faible de sous-produits indésirables au cours du procédé de fabrication de la préforme.

Dans un exemple précis de réalisation, le procédé de l'invention a été mis en oeuvre en laboratoire, avec une installation conforme à celle de la figure 1, pour fabriquer des préformes en PET. La résine PET utilisée était une résine type EK 9921W, dont la viscosité intrinsèque, selon les spécifications du fournisseur de la résine, était comprises entre 0.80 et 0,82. La taille moyenne des granulés de résine était de 3 mm. Le taux de cristallinité des granulés de résine était de l'ordre de 55 %. Le taux d'humidité relative des granulés de résine, immédiatement avant l'opération de séchage, était d'environ 0,5 % (5 000 ppm).
L'extrudeuse utilisée était une machine HUSKY (XL160T). A chaque cycle d'injection étaient fabriquées deux préformes ayant chacune un poids de l'ordre de 44g. La quantité de résine fondue par unité de temps en sortie d'extrudeuse 3 était de l'ordre de 17,5kg/h. La trémie de séchage principale 5 était prévue pour sécher un volume (V1) de résine d'environ 150l. La durée de séchage dans la trémie principale 5 était de l'ordre de 7h. La trémie de séchage secondaire 5' était prévue pour sécher un volume (V2) de résine d'environ 50l. La durée de séchage dans la trémie secondaire 5' était de l'ordre de 2,4h. La température (T1) de l'air de séchage issu de la buse de soufflage 11 de la trémie principale 5 valait environ 150°C. La température des granulés de résine A' à la sortie de la trémie principale était de l'ordre de 145°C. Le taux d'humidité relative des granulés de résine à la sortie de trémie secondaire 5' était d'environ 30 ppm. Différents essais, dont les résultats expérimentaux sont résumés dans le tableau ci-après, ont été réalisés en faisant varier la température des granulés de résine à l'entrée de l'extrudeuse (colonne V), la température de chauffage de l'extrudeuse (colonne VI), et la vitesse de rotation de la vis d'extrusion (colonne VII). Dans le tableau ci-après, les données en % de la colonne VII correspondent en pratique à une donnée de contrôle de l'extrudeuse utilisée (machine HUSKY XL 160T) qui peut être paramétrée en entrée par l'opérateur, et qui permet un réglage de la vitesse de rotation de la vis. La température (T2) de l'air de séchage issu de la buse 11' de la trémie secondaire 5 était supérieure d'environ 5°C à la température (colonne V) de la résine mesurée à la sortie de la trémie secondaire 5. La température des granulés de résine à l'entrée de l'extrudeuse était égale à la température de la résine en sortie de trémie secondaire 5'.

| RESULTATS EXPERIMENTAUX : | | | | | | | |
|---|---|---|---|---|---|---|---|
| | (I) | (II) | **(III)** | **(IV)** | (V) | (VI) | (VII) |
| N° Essai | Concentration AA (ppm) cavité (3a) | Concentration AA (ppm) cavité (3b) | **AA (ppm)** | **Viscosité Intrinsèque** | Temp. Résine (°C) | Temp. Extrud (°C) | Vitesse Vis |
| 1 | 7,29 | 7,69 | **7,49** | **0,826** | 153° | 280° | 15% |
| 2 | 7,34 | 7,51 | **7,43** | **0,826** | 164° | 280° | 15% |
| **3** | **4,56** | **5,03** | **4,80,** | **0,840** | **164°** | **270°** | 15% |
| **4** | **4,67** | **4,75** | **4,71** | **0,840** | **156°** | **270°** | 15% |
| 5 | 12,73 | 13,25 | **12,99** | **0,828** | 157° | 290° | 15% |
| 6 | 12,63 | 12,02 | **12,33** | **0,841** | 163° | 290° | 15% |
| 7 | 12,24 | 13,52 | **12,88,** | **0,837** | 172° | 290° | 15% |
| 8 | 8,12 | 7,61 | **7,87** | **0,789** | 173° | 280° | 15% |
| 9 | 4,81 | 5,13 | **4,97** | **0,815** | 174° | 270° | 15% |
| 10 | 4,61 | 4,87 | **4,74** | **0,817** | 175° | 270° | 10% |
| 11 | 4,54 | 4,39 | **4,47** | **0,816** | 175° | 270° | 10% |

Pour chaque essai, afin de caractériser la dégradation thermique et hydrolytique de la résine, ont été mesurées sur chaque préforme obtenue le taux d'acétaldéhyde (AA), par chromatographie gazeuse (colonnes I, II et III) et la viscosité intrinsèque de la résine. Les données de la colonne III correspondent à la moyenne des concentrations (AA) des colonnes I et II. Les données de la colonne IV correspondent à la moyenne des valeurs de viscosité intrinsèque mesurée sur les deux préformes fabriquées à chaque essai.

Il ressort des résultats expérimentaux ci-dessus que la température optimale de la résine à l'entrée de l'extrudeuse permettant de limiter au mieux la dégradation de la résine en cours de procédé était comprise entre 155°C et 165°C (essais 3 et 4). Il apparaît également que la température de l'extrudeuse a une influence importante sur la dégradation thermique de la résine (comparaison des essais 1 et 2 avec les essais 3 et 4). Dans les essais qui ont été menés, la température optimale de l'extrudeuse était de 270°C.

II revient à l'homme du métier de fixer au cas par cas les valeurs optimales de la température et de la durée de séchage, pour chacune des étapes de séchage, en fonction de la résine utilisée. S'agissant d'une résine d'homo ou de copolymères de PET, la durée de la première étape de séchage sera de préférence comprise entre 6h et 7h, et la température de séchage (T1) sera de préférence comprise entre 145°C et 155°C, ce qui correspond à une température de résine en sortie de la première étape de séchage comprise entre 140°C et 150°C ; la durée de la seconde étape de séchage sera de préférence comprise entre 1h et 3h, et de préférence entre 1h et 2h, et la température de séchage (T2) de la seconde étape de séchage sera fixée en sorte d'obtenir à l'entrée de l'extrudeuse une température de résine comprise entre 155°C et 165°C, et de préférence de l'ordre de 160°C.

Dans l'exemple particulier de réalisation qui a été décrit en référence aux figures, le procédé de fabrication de la préforme était du type mono-injection d'une seule résine. L'invention peut néanmoins s'appliquer également à une procédé de fabrication de préformes par co-injection (parallèle et/ou séquentielle) de plusieurs résines. Le procédé de l'invention n'est pas non plus limité à l'utilisation d'une résine de PET, mais peut s'appliquer au séchage, avant extrusion et injection dans un moule de préforme, de toute résine thermoplastique subissant sous l'effet de la chaleur et de l'humidité une dégradation par hydrolyse et une dégradation thermique au cours du procédé de fabrication de la préforme. Egalement, le procédé de l'invention n'est pas limité à une opération de séchage en deux étapes successives, mais peut être réalisé dans une autre variante en mettant en oeuvre trois étapes ou plus de séchage successives.

## Revendications

1. Procédé de fabrication d'une préforme à partir de granulés (A), d'au moins une résine thermoplastique substantiellement à l'état cristallin, au cours duquel on réalise les opérations successives suivantes:
- séchage des granulés (A), dans des moyens de séchage (2) raccordés en sortie à une extrudeuse (3),
- fusion des granulés de résine séchés, dans l'extrudeuse (3) et
- injection de la résine fondue dans un moule et démoulage de la préforme,
**caractérisé en ce que** l'opération de séchage est réalisée en au moins deux étapes distinctes successives:
- dans une première étape, on sèche les granulés (A) de résine substantiellement à l'état cristallin pendant une durée prédéterminée (t1) à une température de séchage (T1) prédéterminée,
- dans une deuxième étape, on poursuit le séchage des granulés issus de la première étape à une température de séchage (T2) qui est strictement supérieure à la température de séchage (T1) de la première étape, et pendant une durée (t2) qui est strictement inférieure à la durée (t1) de la première étape.

2. Procédé selon la revendication 1 **caractérisé en ce que** la résine thermoplastique est une résine d'homo ou de copolymères de PET, et **en ce que** l'opération de séchage est réalisé en deux étapes successives de telle sorte que :
- la durée de la première étape de séchage est comprise entre 6h et 7h,
- la température de séchage (T1) de la première étape de séchage est fixée à une valeur telle que la température des granulés en sortie de la première étape de séchage est comprise entre 140°C et 150°C,
- la durée de la seconde étape de séchage est comprise entre 1h et 3h, et de préférence entre 1h et 2h, et
- la température de séchage (T2) de la seconde étape de séchage est déterminée en sorte d'obtenir au début de l'étape suivante de fusion une température des granulés comprise entre 155°C et 165°C, et de préférence de l'ordre de 160°C. granulés comprise entre 155°C et 165°C, et de préférence de l'ordre de 160°C.

3. Procédé de fabrication d'un récipient plastique **caractérisé en ce qu'**on fabrique une préforme conformément au procédé de la revendication 1 ou 2 et **en ce qu'**on étire et on souffle ladite préforme dans un moule.

4. Installation pour la fabrication de préformes à partir d'au moins une résine thermoplastique sous forme de granulés (A) et à l'état substantiellement cristallin, du type comportant des moyens de séchage (2) de la résine thermoplastique, dont la sortie est raccordée à l'entrée d'une extrudeuse (3), laquelle extrudeuse alimente en sortie un moule d'injection (4),
**caractérisée en ce que** les moyens de séchage (2) comportent :
- au moins deux trémies de séchage successives, à savoir une première trémie de séchage (5) prévue pour traiter un volume de résine (V1) et une deuxième trémie de séchage (5') prévue pour traiter un volume de résine (V2) qui est strictement inférieur au volume de traitement (V1) de la première trémie,
- des moyens (1, 6, 7, 8, 9, 10) permettant d'alimenter la première trémie de séchage (5) avec la résine thermoplastique sous forme de granulés (A),
- des moyens (13', 17,18,10') permettant d'acheminer les granulés de résine (A') issus de la première trémie (5) jusqu'à l'entrée de la deuxième trémie (5'),
- des moyens (12, 13 , 11, 14, 21, 11', 24) permettant de faire circuler un gaz de séchage à l'intérieur de la première trémie de séchage (5), et un gaz de séchage à l'intérieur de la deuxième trémie de séchage (5'),
- des premiers moyens de chauffage conçus pour porter à une température (T1) le gaz de séchage introduit dans la première trémie (5), et
- des deuxièmes moyens de chauffage conçus pour porter le gaz de séchage introduit dans la deuxième trémie, à une température (T2) strictement supérieure à la température des premiers moyens de chauffage.

## Claims

1. Process for manufacturing a preform from pellets (A), of at least one thermoplastic resin, substantially in a crystalline state, during which the following successive operations are carried out:
- drying the pellets (A) in drying means (2) the output of which is connected to an extruder (3);
- melting the dried pellets of resin in the extruder (3); and
- injecting the melted resin into a mould and removing the preform from the mould;
**characterised in that** the drying operation is carried out in at least two successive separate steps:
- in a first step, the pellets (A) of resin substantially in a crystalline state are dried for a predetermined duration (t1) at a predetermined drying temperature (T1);
- in a second step, the drying of the pellets from the first step is continued at a drying temperature (T2) that is strictly higher than the drying temperature (T1) of the first stage, and for a duration (t2) that is strictly shorter than the period (t1) of the first step.

2. Process according to claim 1, **characterised in that** the thermoplastic resin is a PET homopolymer or copolymer resin, and **in that** the drying operation is carried out in two successive steps in such a way that:
- the duration of the first drying step is between 6 h and 7 h;
- the drying temperature (T1) of the first drying step is fixed at a value such that the temperature of the pellets at the output from the first drying step is between 140°C and 150°C;
- the duration of the second drying step is between 1 h and 3 h, and, preferably, between 1 h and 2 h; and
- the drying temperature (T2) of the second drying step is determined in such a way as to obtain, at the beginning of the following melting step, a pellet temperature of between 155°C and 165°C and, preferably, in the order of 160°C.

3. Process for manufacturing a plastic recipient, **characterised in that** a preform is manufactured according to the process of claim 1 or 2 and **in that** said preform is drawn and blown in a mould.

4. Installation for the manufacture of preforms from at least one thermoplastic resin in the form of pellets (A) and in a substantially crystalline state, of the type comprising means (2) for drying the thermoplastic resin, the output of which is connected to the input of an extruder (3), which extruder feeds, at its output, an injection mould (4);
**characterised in that** the drying means (2) comprise:
- at least two successive drying hoppers, namely a first drying hopper (5) provided to process a resin volume (V1) and a second drying hopper (5') provided to process a resin volume (V2) that is strictly smaller than the processing volume (V1) of the first hopper;
- means (1, 6, 7, 8, 9, 10) enabling the first drying hopper (5) to be fed with the thermoplastic resin in the form of pellets (A);
- means (13', 17, 18, 10') enabling the pellets of resin (A') from the first hopper (5) to be directed to the input of the second hopper (5');
- means (12, 13, 11, 14, 21, 11', 24) enabling a drying gas to be circulated through the inside of the first drying hopper (5) and a drying gas to be circulated through the inside of the second drying hopper (5');
- first heating means designed to bring to a temperature (T1) the drying gas introduced into the first hopper (5); and
- second heating means designed to bring the drying gas introduced into the second hopper to a temperature (T2) strictly higher than the temperature of the first heating means.

## Patentansprüche

1. Verfahren zur Herstellung eines Vorformlings aus Körnchen bzw. Granulat (A) mindestens eines im wesentlichen in kristallinem Zustand vorliegenden thermoplastischen Harzes, in dessen Verlauf die folgenden aufeinanderfolgenden Arbeitsgänge durchgeführt werden:
- Trocknen der Körnchen bzw. des Granulats (A) in Trocknungseinrichtungen (2), die am Ausgang mit einem Extruder (3) verbunden sind,
- Aufschmelzen der getrockneten Harzkömchen in dem Extruder (3) und
- Einspritzen des geschmolzenen Harzes in eine Form und Herausnehmen des Vorformlings aus der Form,
**dadurch gekennzeichnet, dass** die Trocknung in mindestens zwei aufeinanderfolgenden getrennten Stufen durchgeführt wird:
- in einer ersten Stufe werden die Körnchen bzw. das Granulat (A) aus dem im wesentlichen in kristallinem Zustand vorliegenden Harz für eine vorgegebene Zeitspanne (t1) bei einer vorgegebenen Trocknungstemperatur (T1) getrocknet, und
- in einer zweiten Stufe wird die Trocknung der (das) aus der ersten Stufe stammenden Körnchen bzw. Granulats bei einer Trocknungstemperatur (T2) fortgesetzt, die streng oberhalb der Trocknungstemperatur (T1) der ersten Stufe liegt, für eine Zeitspanne (t2), die streng kürzer ist als die Zeitspanne (t1) der ersten Stufe.

2. Verfahren nach Anspruch 1, **dadurch gekennzeichnet, dass** das thermoplastische Harz ein Homo- oder Copolymer von PET ist und dass die Trocknung in zwei aufeinanderfolgenden Stufen in der Weise durchgeführt wird, dass
- die Dauer der ersten Trocknungsstufe zwischen 6 und 7 h liegt,
- die Trocknungstemperatur (T1) der ersten Trocknungsstufe auf einen solchen Wert festgelegt wird, dass die Temperatur der Körnchen beim Austritt aus der ersten Trocknungsstufe zwischen 140 und 150 °C liegt,
- die Dauer der zweiten Trocknungsstufe zwischen 1 und 3 h, vorzugsweise zwischen 1 und 2 h, liegt, und
- die Trocknungstemperatur (T2) der zweiten Trocknungsstufe so festgelegt wird, dass zu Beginn der darauf folgenden Aufschmelzstufe die Temperatur der Kömchen zwischen 155 und 165 °C, vorzugsweise in der Größenordnung von 160 °C, liegt.

3. Verfahren zur Herstellung eines Kunststoff-Behälters, **dadurch gekennzeichnet, dass** man nach dem Verfahren nach Anspruch 1 oder 2 einen Vorformling herstellt und den Vorformling in einer Form auszieht oder aufbläst.

4. Vorrichtung zur Herstellung von Vorformlingen aus mindestens einem thermoplastischen Harz in Form von Körnchen bzw. Granulat (A) und in einem im wesentlichen kristallinen Zustand, die Einrichtungen (2) zum Trocknen des thermoplastischen Harzes aufweist, deren Ausgang mit dem Eingang eines Extruders (3) verbunden ist, aus dessen Ausgang das Harz in eine Spritzform (4) eingeführt wird,
**dadurch gekennzeichnet, dass** die Trocknungseinrichtungen (2) umfassen:
- mindestens zwei aufeinanderfolgende Trocknungstrichter, d.h. einen ersten Trocknungstrichter (5), der vorgesehen ist, um ein Harzvolumen (V1) zu behandeln, und einen zweiten Trocknungstrichter (5'), der vorgesehen ist, um ein Harzvolumen (V2) zu behandeln, das streng kleiner ist als das Behandlungsvolumens (V1) des ersten Trichters,
- Einrichtungen (1, 6, 7, 8, 9, 10), welche die Beschickung des ersten Trocknungstrichters (5) mit dem thermoplastischen Harz in Form der Kömchen bzw. des Granulats (A) erlauben,
- Einrichtungen (13', 17, 18, 10'), welche den Transport der aus dem ersten Trichter (5) austretenden Harzkömchen (A') bis in den Eingang des zweiten Trichters (5') erlauben,
- Einrichtungen (12, 13, 11, 14, 21, 11', 24), die das Zirkulierenlassen eines Trocknungsgases im Innern des ersten Trocknungstrichters (5) und eines Trocknungsgases im Innern des zweiten Trocknungstrichters (5') erlauben,
- erste Erhitzungseinrichtungen, die dazu bestimmt sind, das in den ersten Trocknungstrichter (5) eingeführte Trocknungsgas auf eine Temperatur (T1) zu bringen, und
- Erhitzungseinrichtungen, die dazu bestimmt sind, das in den zweiten Trocknungstrichter eingeführte Trocknungsgas auf eine Temperatur (T2) zu bringen, die streng oberhalb der Temperatur der ersten Erhitzungseinrichtungen liegt.
